# EUROPÄISCHE PATENTSCHRIFT

(11) **EP 3 350 274 B1**
(45) Veröffentlichungstag und Bekanntmachung des Hinweises auf die Patenterteilung: **10.06.2020**
(21) Anmeldenummer: 15771546.7
(22) Anmeldetag: 18.09.2015
(51) Int. Cl.: C08K 3/36

(54) **KLEBEBAND, INSBESONDERE KABELWICKELBAND, MIT GERINGER NEIGUNG ZUM ABLÖSEN SEINER VERKLEBTEN ENDEN**
ADHESIVE TAPE, ESPECIALLY CABLE WRAPPING TAPE, WITH A LOW TENDENCY TO DEBOND AT THE ENDS
BANDE ADHÉSIVE, EN PARTICULIER BANDE D' ENROULEMENT DE CÂBLES, AYANT UNE TENDANCE RÉDUITE À SE DÉCOLLER AUX EXTRÉMITÉS

(43) Veröffentlichungstag der Anmeldung: 25.07.2018
(73) Patentinhaber: Coroplast Fritz Müller GmbH & Co. KG, 42279 Wuppertal (DE)
(72) Erfinder: RÖNISCH, Ralf, 42349 Wuppertal (DE); LODDE, Christoph, 59439 Holzwickede (DE)
(74) Vertreter: Patent- und Rechtsanwälte Dr. Solf & Zapf
(86) Internationale Anmeldenummer: PCT/EP2015/071437
(87) Internationale Veröffentlichungsnummer: WO 2017/045726

(56) Entgegenhaltungen:
- EP-A1- 2 520 628
- EP-A1- 2 818 527
- EP-A1- 2 933 299

## Beschreibung

Die vorliegende Erfindung betrifft ein Klebeband, insbesondere ein Kabelwickelband, mit einem textilen Träger, der mindestens auf einer Seite mit einer selbstklebenden Klebeschicht versehen ist, die aus einem druckempfindlichen Haftkleber besteht, der ein UV-vernetztes Acrylat enthält.

Klebebänder der genannten Art müssen hinsichtlich ihrer Gebrauchseigenschaften einheitliche Standards, insbesondere die Norm LV 312 (10/2009), erfüllen. Diese Norm klassifiziert Klebebänder im Hinblick auf ihre Eigenschaften für Anwendungen in der Automobilindustrie, vorzugsweise zum Bündeln und Umwickeln von Leitungen und Leitungssätzen. Die oben genannte Norm wurde von den Vertretern der Automobilhersteller AUDI AG, BMW AG, Daimler AG, Porsche AG und Volkswagen AG erarbeitet. Wenn nachfolgend diese Norm LV 312 oder andere Normen erwähnt werden, sind immer die zum Anmeldezeitpunkt gültigen Ausgaben gemeint.

Zu den Gebrauchseigenschaften von Klebebändern zählen beispielsweise die Klebkraft auf dem Bandrücken und die Abrollkraft sowie die Handeinreißbarkeit. Weitere Gebrauchseigenschaften sind die Klebkraft auf bestimmten Materialien, die Dicke, die Reißdehnung, die Bruchkraft, die Weiterreißfestigkeit, die Abriebfestigkeit und die Temperaturbeständigkeit. Je nach Einsatzgebiet in der Automobilindustrie müssen Klebebänder verwendet werden, die eine Temperaturbeständigkeit bei Temperaturen größer als 125 °C aufweisen müssen.

Ein ähnliches Klebeband, wie das der eingangs genannten Art ist aus der EP 2 520 628 A1 bekannt. Dieses Dokument beschreibt ein Klebeband zum Umwickeln von Kabeln, bestehend aus einem vorzugsweise textilen Träger und aus einer auf mindestens einer Seite des Trägers aufgebrachten Haftklebemasse in Form einer getrockneten Polymerdispersion, wobei das Polymer aufgebaut ist aus: a) 40 bis 90 Gew.-% n-Butylacrylat und/oder 2-Ethylhexylacrylat, b) 0 bis 10 Gew.-% eines ethylenisch ungesättigten Monomers mit einer Säure- oder Säureanhydridfunktion, c) 60 bis 10 Gew.-% eines oder mehreren von a) und b) verschiedenen ethylenisch ungesättigten monofunktionellen Monomeren, d) 0 bis 1 Gew.-% eines di- oder mehrfunktionellen Monomers, und wobei die Haftklebemasse zwischen 15 und 100 Gewichtsteile eines Klebrigmachers (bezogen auf die Masse der getrockneten Polymerdispersion) enthält. Auf diese Weise soll ein Klebeband zur Verfügung gestellt werden, das trotz leichter Abwickelbarkeit eine gute Abflaggresistenz hat und zugleich eine Kabelverträglichkeit über alle genannten Temperaturklassen aufweist, und das ein besonders einfaches, preiswertes und schnelles Ummanteln von langgestrecktem Gut wie Kabelsätzen in Automobilen ermöglicht.

Insbesondere soll das aus der EP 2 520 628 A1 bekannte Kabelwickelband drei Hauptanforderungen erfüllen.

Die erste Hauptanforderung besteht dabei zunächst in einer leichten Abwickelbarkeit, d. h. dass das in Rollenform dargereichte Produkt für eine einfache Verarbeitung leicht von der Rolle abwickelbar sein muss.

Die zweite Hauptanforderung wird an die sogenannte Abflaggresistenz gestellt, wobei unter Flagging - bei einem um einen Körper gewickelten Klebeband - die Neigung eines Klebebandendes abzustehen verstanden wird. Als Ursache für das Abstehen wird dabei eine Kombination von Haltekraft durch den Klebstoff, der Steifigkeit des Trägers und des Durchmessers des Kabelsatzes angesehen. In der Praxis dürfen Klebebandenden sich nicht selbsttätig ablösen.

Gerade bei Kabelsätzen mit sehr geringem Durchmesser besteht aber beim Einsatz herkömmlicher Kabelwickelbänder die Gefahr, dass sich aufgrund der Rückstellkraft des Trägers das Klebebandende löst und wie eine Flagge vom Kabelsatz absteht. Dies versucht man des Öfteren durch eine Erhöhung der Klebkraft, also der Adhäsion, zu vermeiden, wobei damit aber durch die entsprechenden technischen Maßnahmen auch eine Reduktion der inneren Festigkeit, also der Kohäsion, des Klebers, einhergeht. Umgekehrt steht eine Erhöhung der Scherfestigkeit, welche durch die Kohäsion bestimmt wird und ebenfalls gemäß einer Hypothese in der Fachwelt mit dem Flaggingverhalten in direktem Zusammenhang stehen soll, zu einer angestrebten Klebkrafterhöhung im Widerspruch.

Schließlich wird als dritte Hauptanforderung die Kabelverträglichkeit genannt. Darunter wird verstanden, dass die Kabelisolierung nicht durch den Einfluss des Klebebandes in Kombination mit erhöhter Temperatur über einen längeren Zeitraum verspröden oder auf andere Weise, z. B. durch Verfärbung, degenerieren darf. Gleiches gilt auch für das Klebeband. Unterschieden wird hier gemäß der LV 312 zwischen vier Temperaturklassen T1 bis T4.

Bekannt ist weiterhin ein Klebeband der eingangs genannten Art, welches unter der Produktbezeichnung "Coroplast 837 X" vertrieben wird. Dieses bekannte Klebeband ist ein hochtemperaturbeständiges Polyestergewebeklebeband für die Bündelung und Bandagierung von Kabelsätzen. Es ist manuell verarbeitbar und auch durch Wahl einer vergleichsweise geringen Abrollkraft für die maschinelle Verarbeitung geeignet. Es besitzt eine ausgezeichnete Medienbeständigkeit, wobei es insbesondere gegenüber Diesel und Superbenzin länger als zwei Wochen beständig ist. Das Klebeband verfügt des Weiteren über eine herausragende Kälte- und Wärmebeständigkeit, ist alterungsbeständig und verrottungsfest, hochreißfest und abriebfest, PVC-verträglich sowie auch kompatibel mit vielen Kunststoff-Leitungsisolationen, die in jüngster Vergangenheit neu auf den Markt gekommen sind. Außerdem ist es halogenfrei und emissionsarm.

Grundsätzlich werden insbesondere vier Arten von Klebstoffen unterschieden, die für Klebebänder einsetzbar sind. Es sind dies lösemittelhaltige Systeme, reaktive Systeme, Schmelzklebstoffe, die auch als Hotmelts bezeichnet werden, und wasserbasierte Systeme.

Bei UV-vernetzbaren Polyacrylsäureestern, wie sie nach ihrer Vernetzung Bestandteil des Klebebandes "Coroplast 837 X" sind, handelt es sich um lösemittelfreie Klebstoffe, die insbesondere auch von Kleberstoffen, welche durch eine Fotopolymerisation hergestellt sind, zu unterscheiden sind.

Unter Polymerisation wird die Bildung hochmolekularer Verbindungen aus gleichartigen, niedermolekularen Einheiten (Monomeren) verstanden. Eine Vernetzung geht dagegen bereits von Polymeren oder Präpolymeren aus. Sie bewirkt lediglich eine weitere Steigerung der Molekularmasse, wobei die Vernetzungsdichte über die Anzahl der reaktiven Stellen vorgegeben wird. Weitere Unterschiede veranschaulicht die nachstehende Tabelle 1.

**Tabelle 1**

| | |
|---|---|
| Fotopolymerisierbare Acrylate | UV-vernetzbare Acrylate |
| Reaktive Doppelbindungen | Keine reaktiven Doppelbindungen |
| Freier Fotoinitiator | Einpolymerisierter Fotoinitiator |
| Mehrkomponentensystem aus ungesättigten Mono- und Oligomeren, Fotoinitiator und ggf. Vernetzern | Weitgehend monomerfreies Einkomponentensystem |
| Niedrige Viskosität bei 25 °C | Hohe Viskosität bei 25 °C |

Beim Entwickeln von Klebebändern ist zu beachten, dass die Eigenschaften eines Klebstoffes, die er im Zusammenwirken mit einem bestimmten Träger, z. B. mit einem Folienträger, entfaltet, beispielsweise die Klebkraft auf Stahl oder die Klebkraft auf dem Bandrücken, nicht unmittelbar auf einen anders gearteten Träger, z. B. einen textilen Träger, übertragbar sind. Auch bei textilen Trägern selbst gibt es Unterschiede, z. B. je nachdem, ob ein Gewebeträger oder ein Vliesträger eingesetzt wird, oder je nachdem, aus welchem Werkstoff, z. B. Baumwolle, Polyester oder Polyamid, das Trägergewebe besteht.

Entsprechendes gilt auch für die Entwicklung von Klebstoffformulierungen selbst. Es ist nicht vorauszusetzen, dass ein Additiv, welches in einem wasserbasierenden Klebstoff eine bestimmte Eigenschaftsmodifikation, z. B. Thixotropie oder umgekehrt Rheopexie, bewirkt, die gleiche Wirkung in einem Klebstoff hervorruft, der ein organisches Lösungsmittel enthält oder der ein Reaktivkleber ist. Ein in einem niedrigviskosen fotopolymerisierbaren Acrylatkleber die Thixotropie anhebendes Additiv, kann - aber muss nicht zwangsläufig - in einem hochviskosen UV-vernetzbaren bzw. -vernetzten Acrylatkleber die gleiche Wirkung haben.

Zum Eigenschaftsbild des bekannten Klebebandes "Coroplast 837 X" trägt in bedeutendem Maß der lösemittelfreie Acrylatklebstoff der Klebeschicht bei, bei dem es sich - im Gegensatz zu den monomerhaltigen Klebstoffen der EP 2 520 628 A1 - um einen UV-vernetzbaren Kleber handelt. Kabelwickelbänder mit Haftklebemassen auf Basis von UV-vernetzbaren Polyacrylsäureestern, zu denen das Produkt "Coroplast 837 X" zählt, werden allerdings in der EP 2 520 628 A1 dahingehend als nachteilig bewertet, dass diese zwar in die höheren Temperaturklassen gemäß der LV 312 eingeordnet werden können, aber zum Flagging neigen.

Der Erfindung liegt die Aufgabe zugrunde, ein Klebeband, insbesondere ein Kabelwickelband, der eingangs genannten Art zu schaffen, das bei Wahrung der Vorteile des Einsatzes von UV-vernetzbaren Acrylaten in der auf dem textilen Träger aufgebrachten Klebebeschichtung, z. B. seiner leichten Abwickelbarkeit vom Bandrücken, nach seiner Montage eine verringerte Neigung zum Flagging, also zum Ablösen seiner verklebten Enden, aufweist.

Das der Erfindung zugrunde liegende Problem wird dadurch gelöst, dass der druckempfindliche Kleber pulverförmiges nanoskaliges Siliciumdioxid enthält.

Unter dem Begriff "textiler Träger" werden im Rahmen der Anmeldung - wie auch im allgemeinen Verständnis - Gewebe sowie auch Gewirke und Vliese (sog. nonwoven) sowie gegebenenfalls aus diesen gebildete Verbünde verstanden, wobei ein Gewebe bevorzugt, und ein Polyestergewebe, insbesondere PET (Polyethylenterephthalat), besonders bevorzugt ist. Träger, die ausschließlich aus Folien gebildet sind, sind damit nicht umfasst.

Unter dem Begriff "nanoskalig" werden anmeldungsgemäß Größenbereiche bis zu einem Durchmesser der Teilchen im SiO₂-Pulver von maximal 1000 nm subsumiert. Eine mittlere Teilchengröße des pulverförmigen Siliciumdioxids kann dabei (insbesondere bei unimodaler Normalverteilung der Teilchengröße) vorzugsweise im Bereich von 5 nm bis 250 nm, besonders bevorzugt im Bereich von 10 nm bis 80 nm, liegen.

Zur Bestimmung der Größe von nanoskaligen Teilchen sind verschiedene Methoden üblich. Eine solche Methode ist z. B. die Bestimmung der mittleren Teilchengröße in Dispersion, wie sie beispielsweise in der Literaturstelle "The ultimate in desktop particle characterization", Verlag Malvern Instruments, Erscheinungsjahr 2003, und "Particle Size Measurement"; T. Allen 4th Edition 1992, ISBN 04123570 and 5th Edition, 1997, ISBN 0412729504 beschrieben wird. Es können zur Teilchengrößenbestimmung aber auch andere vergleichbare und übliche Messmethoden herangezogen werden, beispielsweise "Dynamic Light Scattering (DLS)" (Dr. Michael Kaszuba & Dr. Kevin Mattison "High concentration particle size measurements using dynamic light scattering" Lab Plus international - September 2004, und Dahneke BE. "Measurement of Suspended Particles by Quasielastic Light Scattering", 1983, Wiley). Die Ergebnisse der verschiedenen üblichen Messmethoden differieren jedoch nur so wenig voneinander, so dass die entsprechenden Unterschiede nicht von Relevanz für die Erfindung sind.

Als besonders geeignet wird pulverförmiges Siliciumdioxid mit einer BET-Oberfläche im Bereich von 50 m²/g bis 500 m²/g, vorzugsweise im Bereich von 80 m²/g bis 200 m²/g angesehen. Die BET-Oberfläche wird im Rahmen einer BET-Messung (BET steht dabei für Brunauer, Emmett und Teller, die Urheber des Verfahrens) bestimmt, bei der es sich um ein Analyseverfahren zur Größenbestimmung der Oberfläche von porösen Festkörpern mittels Gasadsorption handelt. Dieses Verfahren wird standardmäßig nach der DIN ISO 9277:2003-05 "Bestimmung der spezifischen Oberfläche von Feststoffen durch Gasadsorption nach dem BET-Verfahren" (ISO 9277:1995) durchgeführt. Die BET-Oberfläche und die mittlere Korngröße der Siliciumdioxidteilchen im Pulver verhalten sich dabei gegenläufig zueinander, wobei mit kleiner werdender Teilchengröße die BET-Oberfläche überproportional zunimmt.

Bei dem pulverförmigen nanoskaligen Siliciumdioxid kann es sich vorteilhafterweise um ein solches handeln, das pyrogen aus flüchtigen Chlorsilanen, wie Siliciumtetrachlorid SiCl₄, in einer Knallgasflamme oder durch Zerstäubung von Quarzsand im elektrischen Lichtbogen hergestellt wird. Es wird in der Praxis auch oft als "pyrogene Kieselsäure" (engl.: fumed silica) bezeichnet. Chemisch gesehen besteht "pyrogene Kieselsäure" aus hochreinem amorphem Siliciumdioxid. Es ist also, obwohl es in Wasser sauer reagiert, genau genommen keine Säure, sondern ein Säureanhydrid. Derartig hergestelltes Siliciumdioxidpulver hat das Aussehen von lockerem weißem Pulver.

Überraschenderweise konnte gefunden werden, dass durch die Zugabe von pyrogener Kieselsäure in den Klebstoff im Eigenschaftsbild eines erfindungsgemäßen Kabelwickelbandes ein sehr ausgewogenes Profil erreicht werden konnte. Das heißt, dass das Eigenschaftsprofil charakterisiert ist durch eine drastische Zunahme der Flaggingresistenz im Vergleich zu dem bekannten Band sowie auch durch einen Anstieg der Abriebfestigkeit. Die weiteren anwendungstechnisch wertvollen Eigenschaften werden durch den erfindungsgemäß eingesetzten Füllstoff vorteilhafterweise dabei nicht beeinträchtigt.

Zum quantifizierten Vergleich der Abflaggresistenz des bekannten und des erfindungsgemäßen Klebebandes lässt sich insbesondere der nachstehend beschriebene, sogenannte TFT-Test (TFT = Threshold Flagging Time) einsetzen, welcher für ein erfindungsgemäßes Klebeband außerordentlich bessere Ergebnisse als für herkömmliche Bänder liefert. Insbesondere zeigte ein entsprechender Vergleich, dass ein erfindungsgemäßes Band hinsichtlich dieses Parameters 10 bis 30 mal besser war als die Vergleichsbänder.

Als Kleberbestandteil erfindungsgemäß einsetzbares pulverförmiges nanoskaliges Siliciumdioxid ist beispielsweise unter den Markennamen Aerosil® der Firma Evonik Industries, Cab-O-Sil® der Firma Cabot Corporation oder HDK®-pyrogene Kieselsäure der Firma Wacker Chemie im Handel. Diese Produkte werden bekanntermaßen zur Herstellung von z. B. in Bädern einsetzbaren Silikondichtungsmassen und in Autolacken sowie Schiffsfarben eingesetzt. Dabei bewirkt das pyrogene Oxid u. a. Thixotropie, geringe Feuchtigkeitsaufnahme, mechanische Festigkeit und die Optimierung rheologischer Eigenschaften, wie die Verdickung von Fetten und Ölen. Pyrogene Oxide finden bekanntermaßen beispielsweise auch in der Kosmetikindustrie, z. B. in Lippenstiften, Cremes und Deodoranten, und in der Elektronikindustrie Verwendung.

Der Gehalt an Siliciumdioxid, insbesondere der Gehalt an pyrogener Kieselsäure, kann bezogen auf das UV-vernetzbare Acrylat im Bereich von 1 phr bis 20 phr, vorzugweise im Bereich von 2 bis 10 phr, liegen. Schon geringe Anteile des Siliciumdioxids bewirken im Zusammenwirken mit dem UV-vernetzbaren Acrylat auf dem Träger einen sehr starken Effekt.

Hydrophiles pyrogen hergestelltes Siliciumdioxid wird von Wasser benetzt und kann in Wasser und - was für die Erfindung von Bedeutung ist - auch in dem als druckempfindlicher Haftkleber eingesetzten, nichtwässrigen UV-vernetzbaren Acrylat problemlos dispergiert werden.

Letzteres trifft allerdings auch für hydrophobes bzw. durch Oberflächenbehandlung hydrophobisiertes Siliciumdioxid zu, so dass auch dieses im Rahmen der Erfindung mit Vorteil einsetzbar ist. Eine derartige Hydrophobisierung kann sogar, wenn sie mit Organosilanen, wie beispielsweise mit Dimethyldichlorsilan, Hexamethyldisilazan, Methacryloxypropyltrimethoxysilan, Octyltrimethoxysilan, Polysiloxan, Hexadecyltrimethoxysilan, vorgenommen wird, die adhäsive Einbindung der Silciumdioxidteilchen in die Acrylat- bzw. Polyacrylatmasse - einschließlich in darin gegebenenfalls vorhandene Harze - außerordentlich begünstigen und wirkt vernetzungsfördernd, indem die hydrophobe Oberflächenschicht der Silciumdioxidteilchen mit in die Molekülstruktur der bei sich bei der UV-Vernetzung bildenden Polyacrylate chemisch eingebunden wird.

Was die Klebstoffbeschichtung betrifft, so werden im Rahmen der Erfindung lösungsmittelfreie UV-vernetzbare Acrylatklebstoffe als druckempfindliche Haftklebstoffe eingesetzt. Dies trägt dazu bei, dass sich das erfindungsgemäße Klebeband durch eine hohe Resistenz gegen verschiedene Chemikalieneinflüsse, eine außerordentlich hohe Beständigkeit gegenüber Alterungsprozessen und durch eine ausgezeichnete Kompatibilität mit verschiedenen zu verklebenden Bauteilen auszeichnet.

Derartige UV-vernetzbare Haftklebstoffe werden beispielsweise in verschiedenen Ausführungsarten unter dem Namen acResin® von der BASF im Handel vertrieben. Sie können bei Temperaturen von 120 °C auf herkömmlichen Hotmelt-Coatern verarbeitet werden, die zusätzlich mit UV-Lampen ausgestattet sind. Spezielle Trocknungsanlagen sind nicht erforderlich. Im Vergleich mit lösungsmittelhaltigen Acrylatklebern weist eine Klebebeschichtung auf der Basis derartiger Haftklebstoffe wegen der darin enthaltenen minimalen Menge von migrationsfähigen Inhaltsstoffen nur eine geringe Ausgasung flüchtiger Substanzen auf, die im sogenannten Fogging-Test ermittelt werden kann.

Bei der Bestrahlung mit UV-C-Licht (250 nm - 260 nm) aus handelsüblichen UV-Strahlern bzw. Lampen wird eine einpolymerisierte UV-C-reaktive Gruppe des Acrylatklebers zur Vernetzungsreaktion mit einer benachbarten Acrylatkette angeregt. Die UV-Vernetzung läuft extrem schnell ab, ist genau kontrollierbar und erfolgt nur so lange, wie das UV-Licht angeboten wird. Die einpolymerisierte fotoreaktive Gruppe in der Seitenkette des acResin® UV-Polymeren reagiert dabei mit einer beliebigen C-H-Gruppe einer Nachbarkette. Besonders aktivierte Bindungen oder gar Doppelbindungen sind nicht erforderlich. Im Gegensatz zur UV-Härtung mit zugemischten Fotoinitiatoren treten durch chemische Anbindung der UV-C-fotoreaktiven Gruppe an die Polymerkette keine migrationsfähigen Restbestandteile auf. Mit zunehmender UV-C-Bestrahlung des Haftklebstofffilmes nimmt der Vernetzungsgrad des Acrylatpolymers zu, und der Haftklebstoff gewinnt an Kohäsion. Gleichzeitig werden dabei Adhäsion und Tack reduziert. Wird ein doppelseitiges Klebeband jedoch mit einem derartigen Standard acResin-Kleber® ohne den erfindungsgemäß vorgesehenen Zusatz hergestellt, so werden auch - wie nachfolgend noch im Detail als Vergleichsbeispiele ausgeführt wird - die erfindungsgemäß erzielbaren exzellent hohen Werte der Flaggingresistenz nicht erreicht.

Erfindungsgemäß kann mit Vorteil vorgesehen sein, dass der Haftkleber der selbstklebenden Klebeschicht durch Zusatz von Weichmachern, Acrylat-Comonomeren und/oder von Polyvinyl-Ether sowie insbesondere von Harzen zur Eigenschaftsverbesserung modifiziert ist. So gibt es eine Vielzahl von Klebharzen, die für lösungsmittelhaltige Acrylat-Klebebeschichtungen bekanntermaßen als zusetzbar und eigenschaftsverbessernd angesehen werden. Stellvertretend für solche Harze seien dabei Pinen-, Inden- und Kolophoniumharze, deren disproportionierte, hydrierte, polymerisierte, veresterte Derivate und Salze, aliphatische und aromatische Kohlenwasserstoffharze, Terpenharze und Terpenphenolharze sowie C5- bis C9- Kohlenwasserstoffharze genannt. Auch Kombinationen dieser und weiterer, mit dem entsprechenden Polyacrylat kompatibler aliphatischer, aromatischer und/oder alkylaromatischer Harze werden eingesetzt, um die Eigenschaften der resultierenden Klebemasse wunschgemäß zu beeinflussen.

Es hat sich gezeigt, dass die vorstehend genannten acResin® UV-Produkte es ebenfalls grundsätzlich zulassen, mit derartigen Harzen abgemischt zu werden, um beispielsweise die Klebkraft der Klebeschicht zu erhöhen. Jedoch ist es dabei ungünstigerweise möglich, dass das Harz je nach seiner Natur mehr oder weniger die zur Vernetzung bestimmte UV-Strahlung absorbiert, so dass die Strahlung nicht mehr in ausreichender Weise zur Vernetzung des Acrylats zur Verfügung steht, wenn nicht die UV-C-Dosis erhöht wird. Auch führt die Modifikation des acResin® UV-Acrylats mit Harz zu einer nachteilhaften Verdünnung der darin enthaltenen UV-C-reaktiven Gruppen, was ebenfalls durch eine höhere UV-C-Dosis ausgeglichen werden muss, um die gleiche Vernetzungsdichte wie in einer nicht mit Harz modifizierten Klebeschicht einzustellen. Diesen Erscheinungen kann dadurch entgegengewirkt werden, dass der Harzgehalt bezogen auf das UV-vernetzbare Acrylat in einem Vorzugsbereich von nur 2 phr bis 10 phr liegt, wobei aber grundsätzlich ein Harzgehalt im Bereich von 1 phr bis 50 phr möglich ist.

Für erfindungsgemäß bevorzugte Ausführungen werden insbesondere ein aliphatisches C5-Harz (Escorez 1304 der Firma Exxon), ein hydriertes KolophoniumEster-Harz (Foral 105 der Firma Eastman) und ein aromatisches C8/C9-Kohlenwasserstoffharz (Kristalex F 100 der Firma Eastman) als besonders geeignet angesehen, um durch ihre Compoundierung mit dem UV-vernetzbaren Acrylat bei gleichbleibender Gewährleistung der erfindungsgemäß erzielbaren hohen Werte des Abriebs und des geringen Flaggings zusätzlich eine Klebkraftsteigerung zu erzielen.

Die UV-C-Dosis, welche bei einem Klebstoffauftrag im Bereich von 20 g/m² bis 100 g/m², vorzugsweise bei einem Klebstoffauftrag im Bereich von 35 g/m² bis 100 g/m², im Bereich von 5 mJ/cm² bis 135 mJ/cm², vorzugsweise im Bereich von 25 mJ/cm² bis 80 mJ/cm² liegen sollte, lässt sich dabei über insgesamt fünf Parameter steuern.

Diese Parameter sind:
a) der UV-Lampen-Typ (dotierte UV-Lampen und nicht dotierte UV-Lampen),
b) die Art und Weise der Reflektoren in den UV-Lampen,
c) die Anzahl der UV-Lampen, welche hintereinander geschaltet werden, um möglichst hohe Produktionsgeschwindigkeiten zu erreichen,
d) die Geometrie der UV-Statuseinheit, insbesondere der Abstand der UV-Lampen zur Beschichtungsbahn,
e) die Beschichtungsgeschwindigkeit, bzw. sich daraus ergebend die Durchlaufgeschwindigkeit der Klebeschicht unter der UV-Strahler-Einheit.

Was den unter a) genannten Parameter betrifft, so kann die Strahlungsdosis durch den Typ und die Leistung der verwendeten UV-Lampen beeinflusst werden, wobei dem Emissionsspektrum dieser Lampen, insbesondere im Wellenlängenbereich zwischen 250 nm und 260 nm (UV-C-Anteil), besondere Bedeutung zukommt, um eine möglichst hohe und somit kostengünstige UV-Vernetzungsausbeute zu erzielen. Generell ist bei marktüblichen UV-Lampen der UV-C-Anteil umso größer, je höher die Strahlungsleistung der Lampe ist. So ist eine Lampe mit z. B. 200 W/cm wirtschaftlicher als eine vergleichbare Einheit mit 120 W/cm, da vergleichbare Vernetzungsdichten in deutlich kürzerer Zeit, d. h. bei höherer Durchlaufgeschwindigkeit der Klebeschicht unter der UV-Strahler-Einheit, erreicht werden können.

Erfindungsgemäß können beispielsweise mit Vorteil entsprechende Reflektorsysteme der Firma IST Metz GmbH (mit sogenannten CMK- und URS®-Reflektoren, wobei die Abkürzung CM für "Cold Mirror" steht) oder Kaltlichtreflektoren der Fa. Dr. Hönle AG eingesetzt werden. Derartige Reflektoren weisen als besondere Eigenschaft auf, dass sie die UV-Strahlung reflektieren und die IR-Wärmestrahlung transmittieren, insbesondere hin zu einem wassergekühlten Absorberprofil, wo die Wärme effektiv abgeführt kann, oder in eine spezielle Absorberschicht. Dadurch wird eine schonende Verarbeitung wärmeempfindlicher Materialien begünstigt.

Neben der erfindungsgemäß nicht geminderten, auch für nicht erfindungsgemäße Klebebänder charakteristischen Klebkraft auf Stahl, die gemessen nach DIN EN 1939 (2003) nach einer Wartezeit von 1 Minute und/oder nach einer Wartezeit von 24 Stunden im Bereich von 5,0 bis 9,0 N/cm, vorzugsweise im Bereich von 5,9 bis 7,5 N/cm, liegen kann, kann erfindungsgemäß die Scherfestigkeit gemessen nach DIN EN 1943 (2002) an 25 mm x 25 mm-Proben und bei 1 kg-Belastung sowie Raumtemperatur im Bereich von mehr als 10.000 Minuten liegen und an 10 mm x 10 mm-Proben bei 500 g-Belastung sowie bei 70 °C Werte von 60 Minuten und des Weiteren an 25 mm x 25 mm-Proben bei 1 kg-Belastung sowie bei 70 °C Werte von 100 Minuten übersteigen.

Weitere vorteilhafte Ausführungen der Erfindung sind in den Unteransprüchen und der nachfolgenden speziellen Beschreibung enthalten. Anhand des Ausführungs- und der Vergleichsbeispiele wird unter Bezugnahme auf die Zeichnung die Erfindung dabei näher erläutert. Dabei zeigen
- Fig. 1: eine Darstellung eines mit einem erfindungsgemäßen Klebeband umwickelten Kabelbaumes und damit auch eine erfindungsgemäße Verwendung,
- Fig. 2: eine schematische Darstellung zur Veranschaulichung der Threshold-Flagging-Time-Testmethode (TFT-Methode).

In den verschiedenen Figuren der Zeichnung sind gleiche Teile stets auch mit den gleichen Bezugszeichen versehen, so dass sie in der Regel auch jeweils nur einmal beschrieben werden.

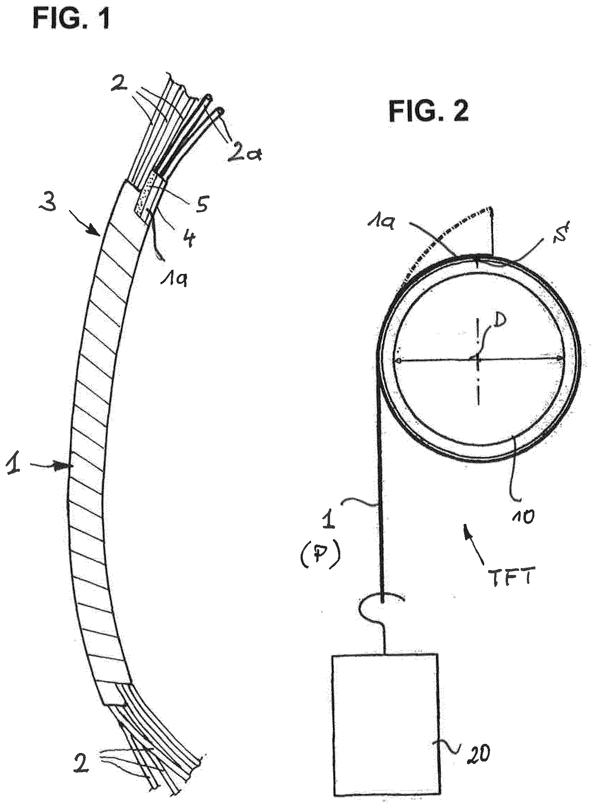

Wie zunächst Fig. 1 veranschaulicht, die einen bevorzugten Anwendungsfall eines erfindungsgemäßen Klebebandes 1 zum Umwickeln von Kabelsätzen zeigt, eignet sich ein erfindungsgemäßes Klebeband 1 mit Vorteil dazu, Adern 2 elektrischer oder auch anderer - z. B. optischer - Leitungen zu ummanteln, wodurch ein Kabelbaum 3, insbesondere für die Automobilindustrie, hergestellt werden kann.

Das erfindungsgemäße Klebeband 1 umfasst dabei einen bandförmigen textilen Träger 4, der vorzugsweise aus einem Polyestergewebe besteht, und eine mindestens einseitig auf den Träger 4 aufgetragene, aus einem Haftklebstoff bestehende Klebebeschichtung 5 mit einem UV-vernetzten Acrylatklebstoff als Hauptbestandteil. Der Aufbau aus Träger 4 und Klebebeschichtung 5 sind Fig. 1 insbesondere an einem quergeschnittenen Klebebandende 1a zu entnehmen.

Der Ausdruck "als Hauptbestandteil" wird anmeldungsgemäß im Sinne von "funktionsbestimmend" gebraucht und kann - muss aber nicht zwangsläufig - bedeuten, dass das Polyacrylat zu mehr als 50 Masseprozent im Klebstoff enthalten ist. Zumindest sollte es aber bevorzugt im Klebstoff den relativ größten Anteil bilden.

Erfindungsgemäß enthält der druckempfindliche Haftkleber der selbstklebenden Klebeschicht 5 pulverförmiges nanoskaliges Siliciumdioxid, dessen Teilchen - wie bereits erwähnt - bevorzugt eine mittlere Größe im Bereich von 5 nm bis 250 nm, besonders bevorzugt im Bereich von 10 nm bis 80 nm, aufweisen können. Das pulverförmige Siliciumdioxid kann mit Vorteil eine BET-Oberfläche im Bereich von 50 m²/g bis 500 m²/g, vorzugsweise im Bereich von 80 m²/g bis 200 m²/g, aufweisen und dabei insbesondere pyrogen aus einem Chlorsilan, wie Siliciumtetrachlorid SiCl₄, oder durch Zerstäubung von Quarzsand im elektrischen Lichtbogen hergestellt sein. Der Gehalt an Siliciumdioxid - bezogen auf das UV-vernetzbare Acrylat - kann insbesondere im Bereich von 1 phr bis 20 phr, vorzugsweise im Bereich von 2 phr bis 10 phr, liegen. Durch eine Oberflächenbehandlung mit Organosilanen kann das SiO₂ hydrophobisiert sein.

Im Rahmen des Ausführungsbeispiels wurde insbesondere Aerosil® R 972 eingesetzt, bei dem es sich um eine handelsübliche, mit DDS (Dimethyldichlorsilan) hydrophobierte pyrogene Kieselsäure der Firma Evonik Industries mit einer BET-Oberfläche von 110 ± 20 m²/g und einem pH-Wert in Wasser von 4,0 ± 0,4 sowie mit einem Kohlenstoffgehalt von 0,9 ± 0,3 Masseprozent handelt. Ähnliche, d. h. höchstens um ± 10 % abweichende Klebeband-Eigenschaften, wurden jedoch auch mit anderen Kieselsäureprodukten erreicht.

Der druckempfindliche Haftkleber ist unmittelbar auf das Textil aufzutragen, wobei mit Vorteil eine durchgehende, ununterbrochene, einheitliche Klebefläche ausgebildet werden sollte. Die Klebeschicht 5 kann dabei jeweils mit einem spezifischen Flächengewicht von etwa 10 g/m² bis 170 g/m², vorzugsweise von etwa 20 g/m² bis 145 g/m², auf den Träger 4 aufgetragen werden. Der Träger 4 kann eine Dicke im Bereich von 0,15 mm bis 1,5 mm, vorzugsweise im Bereich von 0,15 mm bis 0,25 mm, und/ oder vorzugsweise ein spezifisches Flächengewicht im Bereich von 50 bis 250 g/m² aufweisen.

Beispielsweise kann ein als Träger 4 des erfindungsgemäßen Klebebandes 1 dienendes PET-Gewebe mit dem Acrylatklebstoff beschichtet werden. Insbesondere kamen hier die UV-vernetzbaren Acrylate AcResin® 250 und AcResin® 260 zum Einsatz, bei denen es sich um Produkte der Firma BASF mit einpolymerisierten Fotoinitiatoren handelt, wie dies vorstehend beschrieben wurde. Beide Produkte weisen bei Bestimmung bei 130 °C über eine Prüfdauer von 30 Minuten einen Gehalt an nichtflüchtigen Bestandteilen von mehr als 99 Masseprozent auf. Der sogenannte K-Wert - bestimmt nach DIN ISO 1628-1 in einprozentiger Tetrahydrofuran-Lösung - liegt im Bereich von 48 bis 52, die Dichte bei 1,06 g/cm³, die Glasübergangstemperatur, bestimmt nach der DSC-Methode, bei - 38 °C. Die Viskosität bei 130 °C, gemessen gemäß EN ISO 3219, Anhang B an der Kegel-Platte-Vorrichtung bei einer Schergeschwindigkeit von 100 pro Sekunde, liegt im Bereich von 30 mPas bis 70 mPas.

Als Beschichtungsart kann dabei eine direkte Beschichtung auf das Trägermaterial oder eine Transferbeschichtung vorgesehen werden, bei der der Kleber 5 zunächst als Film auf ein silikonisiertes Papier aufgebracht und anschließend auf den Träger 4 übertragen wird.

Dieser Film wird - vorzugsweise unter Einstellung eines an den Kleber, z. B. an dessen Zusammensetzung, angepassten Optimums im Rahmen der oben angegebenen Bedingungen - mittels UV-Stahlung vernetzt und bildet so die haftklebende Klebebeschichtung 5 auf dem Träger 4. Die Klebeschicht 3 kann dabei - mit gegebenenfalls zugesetzten Harzen oder ohne diese - vorteilhafterweise mit einer UV-C-Dosis im Bereich von 5 mJ/cm² bis 160 mJ/cm², vorzugsweise im Bereich von 30 mJ/cm² bis 100 mJ/cm², vernetzt sein.

Das beschichtete Gewebe kann dann auf sich selbst gewickelt und anschließend zu Klebebandrollen konfektioniert werden. Es ist bei einseitigem Kleberauftrag auf den Träger 4 nicht nötig, die Klebeschicht 5 mit einem, insbesondere aus Silikon oder aus silikonisiertem Papier bestehenden, sogenannten Interliner abzudecken, um zu sichern, dass das Klebeband 1 bei der Wickelung auf sich selbst im Rahmen seiner Herstellung nicht verblockt. Jedoch sollte ein Interliner bei zweiseitiger Beschichtung vorgesehen werden.

Mit dem derart hergestellten erfindungsgemäßen Klebeband 1 kann der aus den Adern 2 bestehende Leitungssatz umwickelt werden, wobei die Adern 2 einen aus Kunststoff bestehenden Mantel aufweisen können, der in Fig. 1 mit dem Bezugszeichen 2a bezeichnet ist. Bei dem Kunststoff des Mantels 2a kann es sich beispielsweise um PVC oder auch um einen halogenfreien Werkstoff, wie ein apolares, vorzugsweise dann polyolefinisches, Mantelmaterial oder um einen anderen üblichen Mantelwerkstoff handeln.

Ein erfindungsgemäßes Klebeband zeigte dabei im Vergleich mit den herkömmlichen Montageklebebändern die in der nachstehenden Tabelle 2 wiedergegebenen Eigenschaften.

**Tabelle 2**

| Parameter | Einheit | Klebeband EP 2520628 tesa 51036 | Klebeband 837X | Klebeband nach Erfindung |
|---|---|---|---|---|
| Trägergewicht | g/m² | 130 | 130 | 130 |
| Kleberart | - | Acrylat | Acrylat | Acrylat |
| Klebstoffauftrag | g/m² | 80 | 90 | 90 |
| Dicke | mm | 0,25 | 0,25 | 0,25 |
| Klebkraft Stahl | N/cm | 4,2 - 5,6 | 6,5 - 8,7 | 5,9 - 7,5 |
| Klebkraft Bandrücken | N/cm | 5,4 - 7,5 | 7,5 - 8,8 | 8,4 |
| Abrollkraft | N | 2,8 - 9,7 | 4,5 - 6,8 | 6,4 - 8,3 |
| Abrieb (5 mm Dorn) | Hübe | 900 | 1200 | 1600 |
| Scherfestigkeit 25x25 mm / 1 kg / Raumtemperatur | min | 6500 | > 10000 | > 10000 |
| Scherfestigkeit 10x10 mm / 500 g / Raumtemperatur | min | 40 | 50 | 90 |
| Scherfestigkeit 25x25 mm / 1 kg / 70°C | min | 30 | 50 | 600 |
| TFT-Test | min | > 5000 | 4000 | > 40000 |
| Flagging | mm | 0 | 0 | 0 |
| Flagging nach Klimalagerung | mm | 1-2 | 0 | 0 |

Die angegebenen Eigenschaften konnten in den als bevorzugt angegebenen Parameterbereichen und insbesondere auch bei einer Abweichung von ± 10 Prozent in der Grammatur des Trägers 4 (und damit seiner Dicke) und/oder des spezifischen Auftragsgewichts der Klebebeschichtung 5 von den angegebenen Tabellenwerten erreicht werden.

Wie aus der Tabelle 2 zu entnehmen ist, zeigten sich die Vorteile des erfindungsgemäßen Montagebandes 1 zwar noch nicht bei einer Messung der Abflaggresistenz nach LV312, traten jedoch dafür bei einer Messung der Abflaggresistenz nach der in der eingangs genannten EP 2 520 628 A1 beschriebenen und durch Fig. 2 veranschaulichten TFT-Methode (Threshold Flagging Time) überdeutlich hervor.

Zur Ermittlung des Flaggingverhaltens nach der TFT-Methode kommt ein Test mit einer Apparatur TFT (Fig. 2) zum Einsatz, bei dem durch die Applikation von flach präparierten Prüflingen P des Klebebandes 1 auf einem Kern 10 mit einem Durchmesser D von 1 1/2 Zoll eine zusätzliche Biegespannung erzeugt wird. Die Kombination aus Zugbelastung durch ein Prüfgewicht 20 und Biegespannung bewirkt ein flagging-ähnliches Ablösen des Klebebandes 1 vom verklebten oberen Ende 1a her und ein letztendliches Versagen durch Abfallen der Prüflinge P. Die Zeit in Minuten bis zum Abfallen ist das Ergebnis. Die ausschlaggebenden Parameter für die Haltezeit der Prüflinge P sind Gewicht und Temperatur, wobei das Gewicht so zu wählen ist, dass sich Werte von mindestens 100 min ergeben. Der zylindrisch geformte Prüfdorn ist ein 1 1/2-Zoll-Kern 10 aus Pappe mit 42 ± 2 mm Außendurchmesser D, versehen mit einer Markierungslinie 5 mm neben der Scheitellinie S. Der Haftgrund ist die eigene Rückseite des Klebebands 1. Der dabei eingesetzte Handroller hat ein Gewicht von 2 kg. Das Prüfgewicht 20 beträgt 1 kg. Das Prüfklima ist 23 ± 1 °C (Raumtemperatur) bei 50 ± 5 % relativer Luftfeuchte, beziehungsweise 40 °C im Wärmeschrank. Die Prüfung erfolgt an Streifen von 19 mm breiten Klebebändern 1. Ein Streifen von 400 mm Länge wird auf Trennpapier geklebt und zu drei Streifen von je 100 mm Länge zugeschnitten. Dabei ist eine frische Cutterklinge zu verwenden. Die Rückseite darf nicht berührt werden. Unter eines der Enden eines jeden Streifens wird ein Pappkärtchen geklebt und der Verbund gelocht. Die Prüfstreifen P werden nun einzeln mittig auf Streifen des breiteren Haftgrunds in 1 1/2-facher Breite des zu prüfenden Klebebands 1 verklebt, so dass das Pappkärtchen noch knapp (2 bis 3 mm) am Ende überlappt. Die Prüflinge P werden mit dem 2 kg-Handroller in 3 Zyklen mit einer Geschwindigkeit von 10 m/min überrollt. Die fertigen Prüfmuster, also die Prüfstreifen P samt Haftgrund, werden nun so auf den Kern 10 geklebt, dass das obere Ende des Prüflings P die Scheitellinie S um 5 mm überlappt. Dabei darf nur der Haftgrund und nicht der Prüfling angedrückt werden. Die fertig präparierten Prüflinge P werden für 20 ± 4 Stunden ohne Gewichtsbelastung in einem Klimaraum bei 40 °C belassen. Danach werden die Gewichte 20 mit einer Masse von einem Kilogramm angehängt und die Messuhren gestartet. Die Messung endet nach Versagen aller drei Prüflinge P eines Musters. Der Median der drei Einzelmessungen wird in Minuten angegeben. Die Haltezeit wird in Minuten angegeben. Dabei gilt ein TFT-Wert von > 1200 Minuten als unterer Grenzwert bei der Resistenz gegen Abflaggen. Werte darunter erhalten die Note 0, Werte von 1201 bis 2000 Minuten erhalten die Note 1, Werte von 2001 bis 5000 Minuten erhalten die Note 2 und Werte über 5001 Minuten erhalten die Note 3. In diesen Abstufungen spiegelt sich die steigende Sicherheit gegen Abflaggen wider. Zu weiteren Einzelheiten des TFT-Tests wird vollumfänglich auf die EP 2 520 628 A1 verwiesen.

In der EP 2 520 628 A1 ist für einige Klebeband-Ausführungsformen das Erreichen einer Note 3 dokumentiert, jedoch erreichte das zum Vergleich herangezogene, entsprechend der Lehre dieses Dokuments hergestellte Klebeband tesa 51036 nur Werte von 1200 Minuten, während der das Flagging kennzeichnende TFT-Wert eines erfindungsgemäßen Klebebandes stets größer war als zumindest 7000 min, bevorzugt größer als 20000 min und besonders bevorzugt - wie in der Tabelle 2 angegeben - größer als 40000 min.

Zur Herstellung des erfindungsgemäßen Klebebandes 1 kann eine Beschichtung des Trägers 4 mit verschiedenartig zusammengesetzten Haftklebern in der Klebeschicht 5 erfolgen, wobei die verschiedenartige Zusammensetzung durch einen Verschnitt des druckempfindlichen Klebers mit klebrigmachenden Harzen, wie Pinen-, Inden- und/oder Kolophoniumharzen, deren disproportionierten, hydrierten, polymerisierten, veresterten Derivaten und/oder Salzen und/oder Terpen- und/oder Terpenphenolharzen und/oder aliphatischen, aromatischen, alkylaromatischen Kohlenwasserstoffharzen, insbesondere mit einem oder mehreren C5- bis C9-Kohlenwasserstoffharz(en), eingestellt werden kann. Der Harzgehalt - bezogen auf das UV-vernetzbare Acrylat - kann insbesondere im Vorzugsbereich von 2 phr bis 10 phr liegen. Die Klebeeigenschaften können damit gegenüber den in Tabelle 2 angegebenen noch verbessert werden.

Die Erfindung ist nicht auf das dargestellte Ausführungsbeispiel beschränkt, sondern umfasst im Rahmen der Ansprüche auch alle im Sinne der Erfindung gleichwirkenden Ausführungen und Verwendungen. So ist eine doppelseitige Klebebeschichtung 5 des Trägers 4 zwar primär nicht intendiert, jedoch fällt auch ein Klebeband 1 mit einer solchen in den Bereich der Erfindung. Das erfindungsgemäße Klebeband 1 kann außer - wie bevorzugt - zum Umwickeln von Kabeln in vorteilhafter Weise auch zur Verklebung von Profilen, Kanälen, Gehäusen oder Halteteilen eingesetzt werden. Der mögliche Einsatz eines erfindungsgemäßen Klebebandes 1 beschränkt sich aber nicht auf metallische oder Kunststoff-Werkstoffe, sondern das Klebeband 1 könnte als Klebeband - beispielsweise in der Möbelindustrie - auch zum Verkleben von Holzteilen eingesetzt werden.

Ferner ist die Erfindung nicht auf die im Anspruch 1 definierte Merkmalskombination sowie auf die erfindungsgemäße Verwendung nach Anspruch 17 beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der Ansprüche 1 und 17 weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

### Bezugszeichen

- 1: Klebeband
- 1a: Klebebandende von 1
- 2: Ader von 3
- 3: Kabelbaum mit 1
- 4: Träger von 1
- 5: Klebebeschichtung auf 4

- 10: Kern von TFT
- 20: Gewicht von TFT

- D: Durchmesser von 10
- P: Prüfling aus 1 für TFT
- S: Scheitellinie von 10
- TFT: TFT-Testapparatur

## Patentansprüche

1. Klebeband (1), insbesondere ein Kabelwickelband, mit einem textilen Träger (4), der mindestens auf einer Seite mit einer selbstklebenden Klebeschicht (5) versehen ist, die aus einem druckempfindlichen Haftkleber besteht, der ein lösemittelfreies UV-vernetztes Acrylat enthält, wobei der druckempfindliche Haftkleber pulverförmiges nanoskaliges Siliciumdioxid enthält und das UV-vernetzte Acrylat durch UV-Vernetzung aus Acrylaten mit einpolymerisierten UV-C-reaktiven Gruppen gebildet ist, wobei ein das Flagging des Klebebandes (1) kennzeichnender TFT-Wert größer ist als 7000 min, wobei dieser TFT-Wert wie in der Beschreibung aufgeführt nach einer Lagerung über 20 ± 4 Stunden im Wärmeschrank bei 40 °C in einem Prüfklima von 23 ± 1 °C und bei 50 ± 5 % relativer Luftfeuchte bestimmt wird durch Applikation von Prüflingen (P) des Klebebandes (1) auf einem Kern (10) mit einem Durchmesser (D) von 1 1/2 Zoll, wobei die Prüflinge (P) Streifen von 19 mm Breite und 100 mm Länge sind, wobei durch ein Prüfgewicht (20) von 1 kg eine Zugbelastung und zusätzliche Biegespannung erzeugt wird, die ein Ablösen des Klebebandes (1) von seinem verklebten oberen Ende (1a) her und ein Abfallen der Prüflinge (P) vom Kern (10) bewirkt, und wobei der TFT-Wert die Zeit in Minuten vom Beginn der Messung bis zum Abfallen der Prüflinge (P) ist.

2. Klebeband (1) nach Anspruch 1,
**dadurch gekennzeichnet, dass** Teilchen des pulverförmigen Siliciumdioxids eine mittlere Größe im Bereich von 5 nm bis 250 nm, vorzugsweise im Bereich von 10 nm bis 80 nm, aufweisen.

3. Klebeband (1) nach Anspruch 1 oder 2,
**dadurch gekennzeichnet, dass** das pulverförmige Siliciumdioxid eine BET-Oberfläche im Bereich von 50 m²/g bis 500 m²/g, vorzugsweise im Bereich von 80 m²/g bis 200 m²/g, aufweist.

4. Klebeband (1) nach einem der Ansprüche 1 bis 3,
**dadurch gekennzeichnet, dass** das pulverförmige Siliciumdioxid pyrogen aus einem Chlorsilan, wie Siliciumtetrachlorid SiCl₄, oder durch Zerstäubung von Quarzsand im elektrischen Lichtbogen hergestellt ist.

5. Klebeband (1) nach einem der Ansprüche 1 bis 4,
**dadurch gekennzeichnet, dass** der Gehalt an Siliciumdioxid - bezogen auf das UV-vernetzbare Acrylat - im Bereich von 1 phr bis 20 phr, vorzugsweise im Bereich von 2 phr bis 10 phr, liegt.

6. Klebeband (1) nach einem der Ansprüche 1 bis 5,
**dadurch gekennzeichnet, dass** das Siliciumdioxid, insbesondere durch eine Oberflächenbehandlung mit Organosilanen, wie beispielsweise mit Dimethyldichlorsilan, Hexamethyldisilazan, Methacryloxypropyltrimethoxysilan, Octyltrimethoxysilan, Polysiloxan, Hexadecyltrimethoxysilan, hydrophobisiert ist.

7. Klebeband (1) nach einem der Ansprüche 1 bis 6,
**dadurch gekennzeichnet, dass** der Träger (4) aus einem Gewebe, insbesondere aus einem Polyestergewebe, besteht.

8. Klebeband (1) nach einem der Ansprüche 1 bis 7,
**dadurch gekennzeichnet, dass** der Träger (4) eine Dicke im Bereich von 0,15 mm bis 1,5 mm, vorzugsweise im Bereich von 0,15 mm bis 0,25 mm, und/oder vorzugsweise ein spezifisches Flächengewicht im Bereich von 50 bis 250 g/m² aufweist.

9. Klebeband (1) nach einem der Ansprüche 1 bis 8,
**dadurch gekennzeichnet, dass** der Träger (4) auf beiden Seiten mit einer selbstklebenden Klebeschicht (5) versehen ist.

10. Klebeband (1) nach einem der Ansprüche 1 bis 9,
**dadurch gekennzeichnet, dass** der druckempfindliche Kleber mit klebrigmachenden Harzen, wie Pinen-, Inden- und/oder Kolophoniumharzen, deren disproportionierten, hydrierten, polymerisierten, veresterten Derivaten und/oder Salzen und/oder Terpen- und/oder Terpenphenolharzen und/oder aliphatischen, aromatischen, alkylaromatischen Kohlenwasserstoffharzen, insbesondere mit einem oder mehreren C5- bis C9- Kohlenwasserstoffharz(en), modifiziert ist.

11. Klebeband (1) nach Anspruch 10,
**dadurch gekennzeichnet, dass** der Harzgehalt - bezogen auf das UV-vernetzbare Acrylat - im Bereich von 1 phr bis 50 phr, vorzugsweise im Bereich von 2 phr bis 10 phr, liegt.

12. Klebeband (1) nach einem der Ansprüche 1 bis 11,
**dadurch gekennzeichnet, dass** die/jede Klebeschicht (5) jeweils mit einem spezifischen Flächengewicht von 10 g/m² bis 170 g/m², vorzugsweise von 20 g/m² bis 145 g/m², aufgetragen ist.

13. Klebeband (1) nach einem der Ansprüche 1 bis 12,
**dadurch gekennzeichnet, dass** die/jede Klebeschicht (5) jeweils mit einer UV-C-Dosis im Bereich von 5 mJ/cm² bis 160 mJ/cm², vorzugsweise im Bereich von 30 mJ/cm² bis 100 mJ/cm², vernetzt ist.

14. Klebeband (1) nach einem der Ansprüche 1 bis 13,
**dadurch gekennzeichnet, dass** ein das Flagging kennzeichnender TFT-Wert größer ist als 20000 min, besonders bevorzugt größer als 40000 min.

15. Klebeband (1) nach einem der Ansprüche 1 bis 14,
**dadurch gekennzeichnet, dass** die Klebkraft auf Stahl gemessen nach DIN EN 1939 nach einer Wartezeit von 1 Minute und/oder nach einer Wartezeit von 24 Stunden im Bereich von 5,0 bis 9,0 N/cm, vorzugsweise im Bereich von 5,9 bis 7,5 N/cm, liegt.

16. Klebeband (1) nach einem der Ansprüche 1 bis 15,
**dadurch gekennzeichnet, dass** die Scherfestigkeit gemessen nach DIN EN 1943, sowohl bei Raumtemperatur, als auch bei 70 °C, im Bereich von 80 Minuten bis 10000 Minuten liegt oder vorzugsweise 10000 Minuten übersteigt.

17. Verwendung eines Klebebandes (1) nach einem der Ansprüche 1 bis 16 als Kabelwickelband zur Herstellung eines Kabelbaumes (3), indem ein aus mehreren Adern (2) bestehender Leitungssatz mit dem Klebeband (1) umwickelt wird, wobei ein jeweiliger Mantel (2a) der Adern (2) aus Kunststoff, wie aus PVC oder aus einem halogenfreien Werkstoff, wie einem apolaren, vorzugsweise polyolefinischen, Mantelmaterial gebildet ist.

## Claims

1. Adhesive tape (1), more particularly a cable wrapping tape, having a textile carrier (4) provided at least on one side with a self-adhering adhesive layer (5) consisting of a pressure-sensitive adhesive which comprises a solvent-free UV-crosslinked acrylate, where the pressure-sensitive adhesive comprises pulverulent nanoscale silicon dioxide and the UV-crosslinked acrylate is formed by UV crosslinking from acrylates having copolymerized UV-C-reactive groups, where a TFT value marking the flagging of the adhesive tape (1) is greater than 7000 min, this TFT value being determined, as set out in the description, after storage over 20 ± 4 hours in a heating cabinet at 40°C under test conditions of 23 ± 1°C and at 50 ± 5% relative humidity, by application of test specimens (P) of the adhesive tape (1) to a core (10) having a diameter (D) of 1 1/2 inches, the test specimens (P) being strips 19 mm wide and 100 mm long, where a tensile load and additional flexural stress is generated by a test weight (20) of 1 kg which causes the adhesive tape (1) to detach, starting from its bonded upper end (1a), and causes the test specimens (P) to fall off from the core (10), the TFT value being the time in minutes from the start of the measurement to the falling of the test specimens (P).

2. Adhesive tape (1) according to Claim 1,
**characterized in that** particles of the pulverulent silicon dioxide have a mean size in the range from 5 nm to 250 nm, preferably in the range from 10 nm to 80 nm.

3. Adhesive tape (1) according to Claim 1 or 2, **characterized in that** the pulverulent silicon dioxide has a BET surface area in the range from 50 m²/g to 500 m²/g, preferably in the range from 80 m²/g to 200 m²/g.

4. Adhesive tape (1) according to any of Claims 1 to 3,
**characterized in that** the pulverulent silicon dioxide has been produced pyrogenically from a chlorosilane, such as silicon tetrachloride SiCl₄, or by atomization of silica sand in an electric arc.

5. Adhesive tape (1) according to any of Claims 1 to 4,
**characterized in that** the silicon dioxide content - based on the UV-crosslinkable acrylate - is in the range from 1 phr to 20 phr, preferably in the range from 2 phr to 10 phr.

6. Adhesive tape (1) according to any of Claims 1 to 5,
**characterized in that** the silicon dioxide has been hydrophobized, more particularly by surface treatment with organosilanes, such as, for example, with dimethyldichlorosilane, hexamethyldisilazane, methacryloxypropyltrimethoxysilane, octyltrimethoxysilane, polysiloxane, hexadecyltrimethoxysilane.

7. Adhesive tape (1) according to any of Claims 1 to 6,
**characterized in that** the carrier (4) consists of a woven fabric, more particularly of a woven polyester fabric.

8. Adhesive tape (1) according to any of Claims 1 to 7,
**characterized in that** the carrier (4) has a thickness in the range from 0.15 mm to 1.5 mm, preferably in the range from 0.15 mm to 0.25 mm, and/or preferably has a specific surface weight in the range from 50 to 250 g/m².

9. Adhesive tape (1) according to any of Claims 1 to 8,
**characterized in that** the carrier (4) has been provided on both sides with a self-adhering adhesive layer (5).

10. Adhesive tape (1) according to any of Claims 1 to 9,
**characterized in that** the pressure-sensitive adhesive has been modified with tackifying resins, such as pinene resins, indene resins and/or rosins, their disproportionated, hydrogenated, polymerized, esterified derivatives and/or salts and/or terpene resins and/or terpene-phenolic resins and/or aliphatic, aromatic, alkylaromatic hydrocarbon resins, more particularly with one or more C5 to C9 hydrocarbon resins.

11. Adhesive tape (1) according to Claim 10,
**characterized in that** the resin content - based on the UV-crosslinkable acrylate - is in the range from 1 phr to 50 phr, preferably in the range from 2 phr to 10 phr.

12. Adhesive tape (1) according to any of Claims 1 to 11,
**characterized in that** the/each adhesive layer (5) has been applied in each case with a specific surface weight of 10 g/m² to 170 g/m², preferably of 20 g/m² to 145 g/m².

13. Adhesive tape (1) according to any of Claims 1 to 12,
**characterized in that** the/each adhesive layer (5) has been crosslinked in each case with a UV-C dose in the range from 5 mJ/cm² to 160 mJ/cm², preferably in the range from 30 mJ/cm² to 100 mJ/cm².

14. Adhesive tape (1) according to any of Claims 1 to 13,
**characterized in that** a TFT value marking the flagging is greater than 20 000 min, more preferably greater than 40 000 min.

15. Adhesive tape (1) according to any of Claims 1 to 14,
**characterized in that** the peel adhesion on steel as measured to DIN EN 1939 after a waiting time of 1 minute and/or after a waiting time of 24 hours is in the range from 5.0 to 9.0 N/cm, preferably in the range from 5.9 to 7.5 N/cm.

16. Adhesive tape (1) according to any of Claims 1 to 15,
**characterized in that** the shear strength as measured to DIN EN 1943, both at room temperature and at 70°C, is in the range from 80 minutes to 10 000 minutes or preferably exceeds 10 000 minutes.

17. Use of an adhesive tape (1) according to any of Claims 1 to 16 as cable wrapping tape for producing a cable loom (3), by wrapping the adhesive tape (1) around a lead set consisting of a plurality of conductors (2), with a respective sheath (2a) of the conductors (2) being formed of plastic, such as of PVC or of a halogen-free material, such as an apolar, preferably polyolefinic, sheath material.

## Revendications

1. Bande adhésive (1), notamment bande d'enroulement de câble, comprenant un support textile (4), qui est muni au moins sur un côté d'une couche adhésive autoadhésive (5), qui est constituée par un adhésif de contact sensible à la pression, qui contient un acrylate réticulé par UV sans solvant, l'adhésif de contact sensible à la pression contenant du dioxyde de silicium nanométrique en poudre et l'acrylate réticulé par UV étant formé par réticulation par UV à partir d'acrylates contenant des groupes réactifs avec les UV-C copolymérisés, une valeur TFT caractérisant le flagging de la bande adhésive (1) étant supérieure à 7 000 minutes, cette valeur TFT étant déterminée tel qu'exposé dans la description après un stockage pendant 20 ± 4 heures dans une armoire chauffante à 40 °C dans un climat d'essai de 23 ± 1 °C et à 50 ± 5 % d'humidité relative de l'air par application d'échantillons (P) de la bande adhésive (1) sur un noyau (10) ayant un diamètre (D) de 1 1/2 pouce, les échantillons (P) étant des bandes de 19 mm de largeur et 100 mm de longueur, une charge de traction et une contrainte de flexion supplémentaire étant générées par un poids d'essai (20) de 1 kg, qui réalise un décollement de la bande adhésive (1) à partir de son extrémité supérieure collée (1a) et une chute des échantillons (P) depuis le noyau (10), et la valeur TFT étant le temps en minutes depuis le début de la mesure jusqu'à la chute des échantillons (P).

2. Bande adhésive (1) selon la revendication 1, **caractérisée en ce que** des particules de dioxyde de silicium en poudre présentent une taille moyenne dans la plage allant de 5 nm à 250 nm, de préférence dans la plage allant de 10 nm à 80 nm.

3. Bande adhésive (1) selon la revendication 1 ou 2, **caractérisée en ce que** le dioxyde de silicium en poudre présente une surface BET dans la plage allant de 50 m²/g à 500 m²/g, de préférence dans la plage allant de ⁸⁰ m²/g à 200 m²/g.

4. Bande adhésive (1) selon l'une quelconque des revendications 1 à 3, **caractérisée en ce que** le dioxyde de silicium en poudre est préparé par voie pyrogène à partir d'un chlorosilane, tel que le tétrachlorure de silicium SiCl₄, ou par pulvérisation de sable de quartz dans un arc électrique.

5. Bande adhésive (1) selon l'une quelconque des revendications 1 à 4, **caractérisée en ce que** la teneur en dioxyde de silicium, par rapport à l'acrylate réticulable par UV, se situe dans la plage allant de 1 pce à 20 pce, de préférence dans la plage allant de 2 pce à 10 pce.

6. Bande adhésive (1) selon l'une quelconque des revendications 1 à 5, **caractérisée en ce que** le dioxyde de silicium est hydrophobé, notamment par un traitement de surface avec des organosilanes, tels que par exemple avec du diméthyldichlorosilane, de l'hexaméthyldisilazane, du méthacryloxypropyltriméthoxysilane, de l'octyltriméthoxysilane, du polysiloxane, de l'hexadécyltriméthoxysilane.

7. Bande adhésive (1) selon l'une quelconque des revendications 1 à 6, **caractérisée en ce que** le support (4) est constitué par un tissu, notamment un tissu de polyester.

8. Bande adhésive (1) selon l'une quelconque des revendications 1 à 7, **caractérisée en ce que** le support (4) présente une épaisseur dans la plage allant de 0,15 mm à 1,5 mm, de préférence dans la plage allant de 0,15 mm à 0,25 mm, et/ou de préférence un poids surfacique spécifique dans la plage allant de 50 à 250 g/m².

9. Bande adhésive (1) selon l'une quelconque des revendications 1 à 8, **caractérisée en ce que** le support (4) est muni sur les deux côtés d'une couche adhésive autoadhésive (5).

10. Bande adhésive (1) selon l'une quelconque des revendications 1 à 9, **caractérisée en ce que** l'adhésif sensible à la pression est modifié avec des résines collantes, telles que des résines de pinène, d'indène et/ou de colophane, leurs dérivés dismutés, hydrogénés, polymérisés, estérifiés et/ou leurs sels et/ou des résines de terpène et/ou de terpène-phénol et/ou des résines hydrocarbonées aliphatiques, aromatiques, alkylaromatiques, notamment avec une ou plusieurs résines hydrocarbonées en C5 à C9.

11. Bande adhésive (1) selon la revendication 10, **caractérisée en ce que** la teneur en résine, par rapport à l'acrylate réticulable par UV, se situe dans la plage allant de 1 pce à 50 pce, de préférence dans la plage allant de 2 pce à 10 pce.

12. Bande adhésive (1) selon l'une quelconque des revendications 1 à 11, **caractérisée en ce que** la/chaque couche adhésive (5) est respectivement appliquée avec un poids surfacique spécifique de 10 g/m² à 170 g/m², de préférence de 20 g/m² à 145 g/m².

13. Bande adhésive (1) selon l'une quelconque des revendications 1 à 12, **caractérisée en ce que** la/chaque couche adhésive (5) est respectivement réticulée avec une dose d'UV-C dans la plage allant de 5 mJ/cm² à 160 mJ/cm², de préférence dans la plage allant de 30 mJ/cm² à 100 mJ/cm².

14. Bande adhésive (1) selon l'une quelconque des revendications 1 à 13, **caractérisée en ce qu'**une valeur TFT caractérisant le flagging est supérieure à 20 000 minutes, de manière particulièrement préférée supérieure à 40 000 minutes.

15. Bande adhésive (1) selon l'une quelconque des revendications 1 à 14, **caractérisée en ce que** la force d'adhésion sur de l'acier mesurée selon DIN EN 1939 après un temps d'attente de 1 minute et/ou après un temps d'attente de 24 heures se situe dans la plage allant de 5,0 à 9,0 N/cm, de préférence dans la plage allant de 5,9 à 7,5 N/cm.

16. Bande adhésive (1) selon l'une quelconque des revendications 1 à 15, **caractérisée en ce que** la résistance au cisaillement mesurée selon DIN EN 1943, aussi bien à température ambiante qu'à 70 °C, se situe dans la plage allant de 80 minutes à 10 000 minutes ou de préférence dépasse 10 000 minutes.

17. Utilisation d'une bande adhésive (1) selon l'une quelconque des revendications 1 à 16 en tant que bande d'enroulement de câble pour la fabrication d'un faisceau de câbles (3), par enroulement d'un ensemble de conducteurs constitué par plusieurs fils (2) avec la bande adhésive (1), une enveloppe respective (2a) des fils (2) étant formée à partir d'une matière plastique, tel qu'à partir de PVC ou à partir d'un matériau sans halogène, tel qu'un matériau d'enveloppe apolaire, de préférence polyoléfinique.
